(19) **Europäisches Patentamt / European Patent Office / Office européen des brevets**

(11) **EP 1 850 081 B1**

(12) **EUROPEAN PATENT SPECIFICATION**

(45) Date of publication and mention
of the grant of the patent:
**12.09.2012 Bulletin 2012/37**

(51) Int Cl.:
*F27D 3/14* (2006.01)     *F27B 3/19* (2006.01)
*F27D 3/15* (2006.01)     *C21C 5/52* (2006.01)

(21) Application number: **05772333.0**

(22) Date of filing: **23.06.2005**

(86) International application number:
**PCT/RU2005/000347**

(87) International publication number:
**WO 2006/085789 (17.08.2006 Gazette 2006/33)**

(54) **METHOD FOR REMOVING A MOLTEN METAL MAIN PORTION FROM A METAL-METING CONTAINER THROUGH AN OUTFLOW OPENING EMBODIED IN THE BOTTOM SURFACE THEREOF, A METAL-MELTING CONTAINER AND A FLOWCHART OF MAIN OPERATIONS FOR CARRYING OUT SAID METHOD**

VERFAHREN ZUR ENTFERNUNG EINES HAUPTTEILS VON GESCHMOLZENEM METALL AUS EINEM METALLSCHMELZBEHÄLTER DURCH EINE IN DESSEN BODENFLÄCHE ANGEORDNETE AUSFLUSSÖFFNUNG, METALLSCHMELZBEHÄLTER UND FLUSSDIAGRAMM DER HAUPTVORGÄNGE ZUR DURCHFÜHRUNG DES VERFAHRENS

PROCEDE PERMETTANT D'EVACUER UNE MAJEURE PARTIE DE METAL EN FUSION D'UN RESERVOIR DE METAL EN FUSION PAR UNE OUVERTURE DE SORTIE SITUEE DANS LA SURFACE INFERIEURE DU RESERVOIR, RESERVOIR DE METAL EN FUSION ET SUITE D'OPERATIONS PRINCIPALES PERMETTANT DE METTRE EN OEUVRE CE PROCEDE

(84) Designated Contracting States:
**AT BE BG CH CY CZ DE DK EE ES FI FR GB GR HU IE IS IT LI LT LU MC NL PL PT RO SE SI SK TR**

(30) Priority: **09.02.2005 RU 2005103153**

(43) Date of publication of application:
**31.10.2007 Bulletin 2007/44**

(73) Proprietor: **TECHCOM GmbH
80809 Muenchen (DE)**

(72) Inventors:
• **SCHUMACHER, Ewald Antonovich**
**D-80809 Munchen (DE)**
• **SCHUMACHER, Edgar Ewaldovich**
**D-80809 Munchen (DE)**
• **FRANZKY, Renata Ewaldovna**
**80997 Munchen (DE)**
• **BELITCHENKO, Anatoliy Konstantinovich**
**Rybnitsa 5500 (MD)**
• **DEREVIYNCHENKO, Igor Vitalievich**
**Rybnitsa, 5500 (MD)**
• **SAVIUK, Aleksandr Nikolaevich**
**Rybnitsa, 5500 (MD)**

• **ZINKOVSKIY, Ivan Vasilievich**
**Moscow, 113447 (RU)**
• **HLOPONIN, Viktor, Nikolaevich,**
**Moscow, 119334, (RU)**

(74) Representative: **Bucks, Teresa Anne
Boult Wade Tennant
Verulam Gardens
70 Gray's Inn Road
London WC1X 8BT (GB)**

(56) References cited:
**WO-A1-00/60297     RU-C1- 2 025 499
RU-C1- 2 086 872     SU-A3- 1 838 037**

• **DATABASE WPI Week 198047 Thomson Scientific, London, GB; AN 1980-83940C XP002496983 & SU 727 326 A (KRAMA MECH ENG RES) 17 April 1980 (1980-04-17)**

Remarks:
The file contains technical information submitted after the application was filed and not included in this specification

EP 1 850 081 B1

**Description**

The invention relates to metal manufacture in ferrous and nonferrous metallurgy and is represented by the example of steelmaking in arc steel-smelting furnaces (ASF).

The final stage of metal manufacture in smelting chamber presents discharging of chamber from molten metal. This operation can be executed in a variety of ways, at that the most commonly used method especially in ASF is vertical metal tapping through the outlet at the bottom of chamber. As applied to ASF recently it has become widely spread to empty smelting chamber from the greater part of molten metal and to reserve the smaller part of the metal inside the chamber (for example, see the magazine "Electrometallurgy", № 1, 2000, p. 46).

Formation of slag that plays a very important role in metal making with given chemical composition is a constituent part of the molten metal production process. Slag has the lower density than the molten metal and it is arranged on the top of pool with metal. Maximum exclusion of furnace slag ingress into the bucket reveals the important engineering problem. Successful decision of this problem considerably depends on selected method of metal discharging from the smelting chamber, on embodiment of the chamber itself especially in the part of metal tapping provision.

There is a known process of smelting chamber emptying from molten metal through overflow window (see the RF patent № 2025499 C21C 5/52; F27B 3/14, published in bulletin № 24, 30.12.94).

Basic defective features of this process are considerable time consumption on chamber emptying in the first place and impossibility of furnace slag ingress exclusion inside the bucket together with metal in the second place.

There is a known process of smelting chamber emptying from molten metal through the bottom passage including the usage of eccentric outlet underneath the chamber (TDN-technology, for example see "Metallurgical plant and technology", MRT - 11, translated into Russian 2002, Stephan Lemke, Peter Meyerling, Peter Monheim and others "Technical decisions for steelmaking", p. 26).

This known process of smelting chamber discharging from molten metal became widely distributed for arc steel-smelting furnaces (ASF).

The known method possesses the following defective features:

1. Engineering problem of VORTEX formation (swirl of metal flow) is not resolved. It embarrasses the separation of slag from the molten metal during the process of chamber emptying.
2. Molten metal near the eccentric outlet has the lower temperature and that extends duration of heat because requires metal heating.

There is a known process of smelting chamber emptying from melted steel with the help of infrared intruder system (infrared radiation) (e.g., see the magazine "Steel", № 11, 2004, p. 36).

Basic defective feature of the known method consists in slag penetration to the molten metal of the bucket during the process of tapping (this feature is noted there).

There is a known process of smelting chamber emptying from the greater part of molten metal that includes descending of metal flows leaving the chamber lower than the level of its input through the outlet up to the bottom surface in this part of the chamber, succeeding displacement along the bottom surface and ascending of these metal flows to and above the level of input into the outlet and metal tapping through this outlet, at that descending and ascending metal flows are separated by the wall between butt end of which and bottom surface of the chamber there is a clearance binding descending and ascending metal flows (see e.g. international patent WO 00/60297 F27D 3/14, F27B 3/19 dated from 12.10.2000, with priority from 01.04.1999. The abridgement "Development prospects for steelmaking technology in arc furnaces by 2010" in magazine "Foreign news of ferrous metallurgy" № 1, 2001, p. 40 introduces the advantages of this known process and scheme of its realization. System is abbreviated as "FAST").

Essential features of this known process are very close to the advanced one, so it is taken as a prototype.

The known method possesses the following essential drawbacks excluding its successful implementation for high performance emptying of smelting chamber from the greater part of molten metal with simultaneous metalworking in the bucket that influences on chemical composition of steel:

firstly, coming out of molten metal greater part occurs out of smelting chamber boundaries and it automatically results in cooling of tapping metal and necessity of its heating;

secondly, method realization requires additional chamber outlet for complete emptying of the chamber from the rest of molten metal and slag, that is necessary, for example, at chamber outage;

thirdly, the method doesn't provide addition of elements changing metal properties during its being in the bucket to the molten metal leaving the chamber;

fourthly, method realization needs increased height (about 200 mm) of channel for molten metal running from the chamber in direction of outlet input over the level of chamber bottom. The last automatically leads to necessity of additional level ascending of metal coming into outlet and that reduces the volume of the metal being capable to leave the chamber;

fifthly, method realization doesn't allow to take into account the influence of density and thickness variation in slag layers from melting to melting on the process of chamber emptying, since structural elements of chamber for method execution are made fixed without possible operational replacement, while slag density depends on its chemical composition (e.g., V.I. Yavojskij and others "Steel metallurgy", 1983, p. 51) and thickness of slag layer depends on melting technology and quality of steel to be produced;

sixthly, there is no mechanism preventing ingress of furnace slag to the metal at the beginning of chamber discharging (having occurred to the metal and entered in channels of metal tapping at the beginning of batch liquefaction).

The advanced discharging method of smelting chamber from the greater part of molten metal through the outlet on the bottom surface of the chamber is free from indicated drawbacks. Here metal tapping is carried out directly from the smelting chamber of furnace and that excludes subcooling of tapping metal. The presence of additional outlet in the chamber is not required. Provision is made for addition of elements changing metal properties during its being in the bucket to the molten metal leaving the chamber. Clearance height that is necessary for metal coming into the outlet is considerably reduced. Method realization allows executing of corrective actions depending on assumed chemical composition (density) and layer thickness of slag.

Getting of technical results mentioned above is provided thanks to the fact that in known emptying process of metallic chamber from molten metal that includes descending of metal flows leaving the chamber lower than the level of its input into the outlet up to the bottom surface in this part of the chamber, succeeding displacement along the bottom surface and ascending of these metal flows to and above the level of input into the outlet and metal tapping through this outlet, at that descending and ascending metal flows are separated by the wall between butt end of which and bottom surface of the chamber there is a clearance binding descending and ascending metal flows, according to the invention before the beginning of chamber discharging the level of metal coming into the outlet must be ascended above its initial position on the bottom chamber surface and this ascended position must be kept till the end of chamber emptying from the greater part of metal, at that the leaving metal flows should be separated from ascending metal flows by the wall the height of which determines the ascending value of level of metal coming into the outlet; as soon as the emptying process is interrupted the initial position of input level must be fixed again, the smaller part of the metal is left in the chamber. In addition the elements influencing on the chemical composition of molten metal are put in the metal flows entering the outlet, it occurs simultaneously with the feeding of these metal flows with inert or inactive gas. Feeding of elements to the molten metal is carried out lower than the ascended input level to the outlet. The inert or inactive gas must be preliminary heated. Besides, before the start of chamber emptying process the inert or inactive gas should be circulated through the metal over the outlet and in clearances intended for metal passing from the chamber to the outlet, at that after circulation the gas pressure is kept till the beginning of metal tapping. Beyond that point before batch charging of the chamber the mechanism providing ascent of input level for the metal coming into the outlet must be moved out of possible contact of the mechanism with the charge.

There is a known structure of smelting chamber that renders possible to discharge the chamber from the greater part of molten metal through overflow window (e.g. can be found in the mentioned RF patent № 2 025 499). The known structure possesses essential drawbacks that have been already indicated during method analysis.

There is a known construction of smelting chamber containing mechanisms for discharging from the greater part of molten metal through the outlet with vertical metal tapping (for example see the within-named patent WO 00/60297 F27D 3/14, F27B 3/19 dated from 12.10.2000). The known chamber construction is executed in the form of figurate bowl insulated on the top from ambient medium by the framed structure with formation of operating space of the chamber. The construction of framed structure can form arched roof of the chamber and provide batch routing of the chamber in the form of heated junk.

According to dominant features the indicated known construction of smelting chamber is very close to the advanced structure, so it is accepted as a prototype.

The known construction of smelting chamber realizing the method of chamber emptying from the part of molten metal known from the same patent possesses essential defective features having been circumstantially analyzed during consideration of chamber discharging method, as together with techniques of method realization these defective features are conditioned by embodiment of the chamber itself. The essential elements of the invention are set-forth in claims 1 and 7

The advanced smelting chamber for advanced method realization of its emptying from the greater part of molten metal is free from these drawbacks. The practical embodiment of advanced smelting chamber allows realizing the enumerated techniques of advanced method with arrangement of metal tapping directly from operating space of the chamber and ensures the exclusion of furnace slag ingress to the bucket. It deletes the necessity of two outlets in the furnace, provides addition of elements changing metal properties during its being in the bucket to the molten metal leaving the chamber, allows execution of corrective actions on metal flow movement depending on assumed chemical composition (density) and layer thickness of slag, and excludes swirling and vortex processes of metal and slag.

Getting of mentioned technical results is provided thanks to the fact that in known construction of smelting chamber for method realization of chamber discharging from the greater part of molten metal executed in the form of figurate bowl insulated on the top from ambient medium by the framed structure with formation of operating space of the chamber, in compliance with invention there is a spindle made of fireproof material going through the upper part of framed construction oppositely to the outlet; the top end of the spindle is situated out of the chamber operating space and the spindle affords axial displacement from the drive in the direction of chamber bottom; the lower part of the spindle is ended by glass-shaped enclosure where extension is rigidly fixed by bridges on the centre of the spindle; the extension is installed with the clearances between corresponding mirrored surfaces of the enclosure and extension, at that the extension is executed with central through hole, the surface of its butt end juts out of spindle limits and the outline of this surface repeats the outline of bottom surface in section of the input to the outlet, extension height over the surface of chamber bottom in section of the outlet is equal to the ascending value of input level of metal coming into the outlet, and all the enumerated holes and clearances separately that are intended for metal going from the chamber into the outlet have open flow areas at least equal to the open flow area of the outlet. The spindle has a through hole in section "upper butt end - bottom of glass-shaped enclosure". At that there must be applied the following formu-

la $h > h_1 + \dfrac{\rho_s}{\rho_m} h_2$, where $h$ - extension height, $h_1$ - height of extension jut beyond the spindle limits, $h_2$ - assumed maximum height of slag layer over the metal at the end of metal tapping from the chamber, $\rho_m$ and $\rho_s$ -specific mass of metal and slag correspondingly. In that connection the spindle in downward position is joined without clearances by extension jut to the surface of chamber bottom. Besides, the outlet input on the bottom surface of chamber is made as a hole with tapered surface and oppositely the extension has the jut with mirrored tapered surface toward this hole. Moreover the conditions for bringing-out of extension to the upper part of the chamber operating space are provided where the contact of the extension with the charge is excluded. There is also a jut in the centre of the glass-shaped enclosure bottom of the spindle. The butt end of the jut has a central through hole to the upper part of the spindle that is connected with feeding mechanisms of hard materials with different fraction as well as inert or inactive gas by flexible hoses. Upon that at the level of the glass-shaped enclosure bottom this hole has crosswise channels that additionally connect the central hole with this enclosure. The crosswise channels are made inclined with ascending from the bottom of the glass-shaped enclosure toward the central hole of the spindle. The spindle axis is perpendicular to the surface of enclosure bottom in the section of outlet. The spindle axis is deviated from the vertical axis of the outlet at an angle of deflection $\gamma$ and at that both axes are situated on the same straight line. The through hole in extension consists of tapered and cylindrical sections, at that the tapered part is an input and the cylindrical section is an output for the metal and the diameter of cylindrical part is at least equal to the diameter of the outlet hole. The lower spindle part including the glass-shaped enclosure and extension fixed on it is replaceable; for the replacement of the lower spindle part the possibility of bringing the spindle out of the chamber operating space limits was provided.

The invention suggests a special sequence of the basic operations during realization of the developed method exercised by discharging of advanced smelting chamber from the greater part of molten metal being executed with the help of flowing into the bucket. According to the invention it includes the outlet opening on the bottom of the chamber. Before the outlet opening the spindle with extension must be lowered till the firm adherence of extension butt end against the bottom surface of chamber bowl without clearances oppositely to the input of the outlet. During the process of this lowering or after its completion inert or inactive gas must be flushed through the central hole of the spindle. At the moment of termination of the indicated gas flushing the outlet should be opened and the chamber discharging is carried out. At that during the emptying process the elements influencing on the chemical composition of molten metal in the bucket must be delivered to the metal through the central hole in the spindle. This feeding is accompanied by the inflow of inert or inactive gas that at the moment of the contact with metal has the temperature approximately equal to the temperature of metal. The pressure of the gas is at least equal to atmospheric pressure and the emptying process will be automatically interrupted owing to the condition $h = h_1 + \dfrac{\rho_s}{\rho_m} h_2 + \Delta h$, where $h$ - extension height, $h_1$ - height of extension jut beyond the spindle limits, $h_2$ - maximum height of slag layer over the metal at the end of metal tapping, $\rho_m$ and $\rho_s$ - specific mass of metal and slag correspondingly, $\Delta h$ - in the section of outlet the thickness reserve of metal layer left in the chamber. Then the outlet must be closed. The smaller part of metal and entire slag are left inside the chamber or the outlet remains open, the extension is forced against the chamber bottom that makes possible to let the smaller part of metal from the outlet. When the outlet is open the spindle should be deflected from the bottom surface and entire slag and the rest of metal are coming out into a separate bucket.

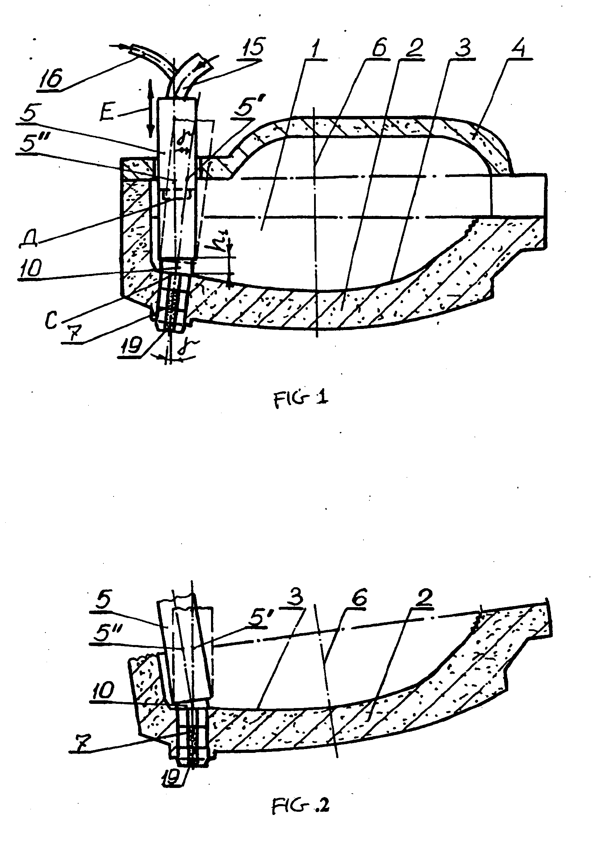

The advanced process, smelting chamber for its realization and sequence of basic operations during its execution are explained by drawings in figures 1-14.

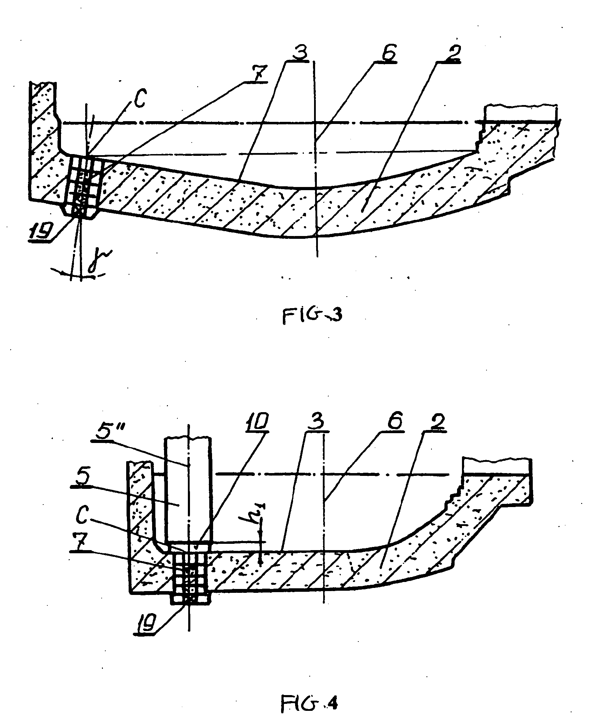

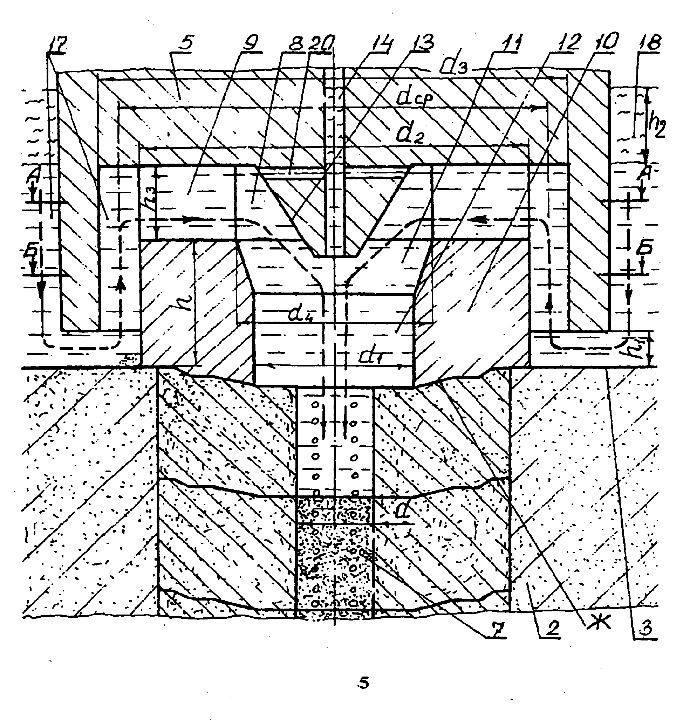

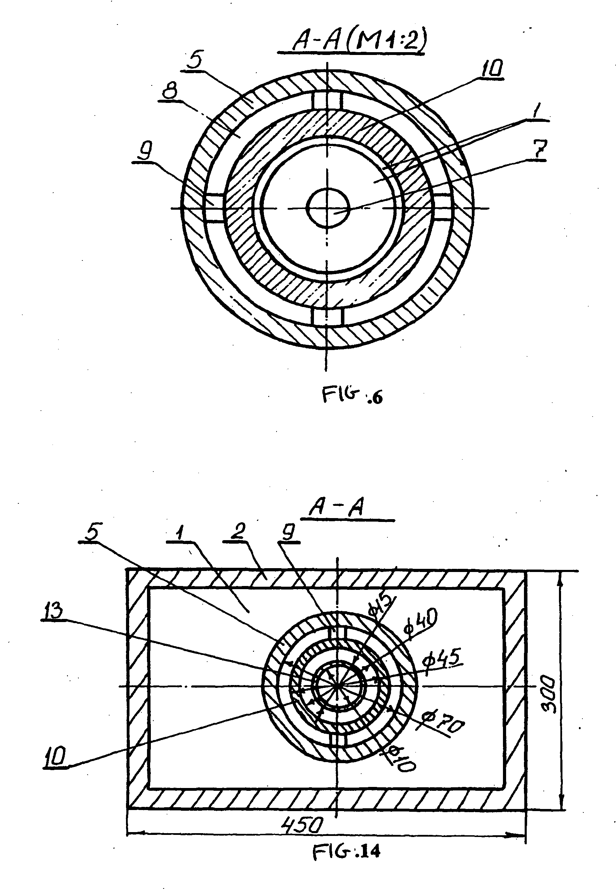

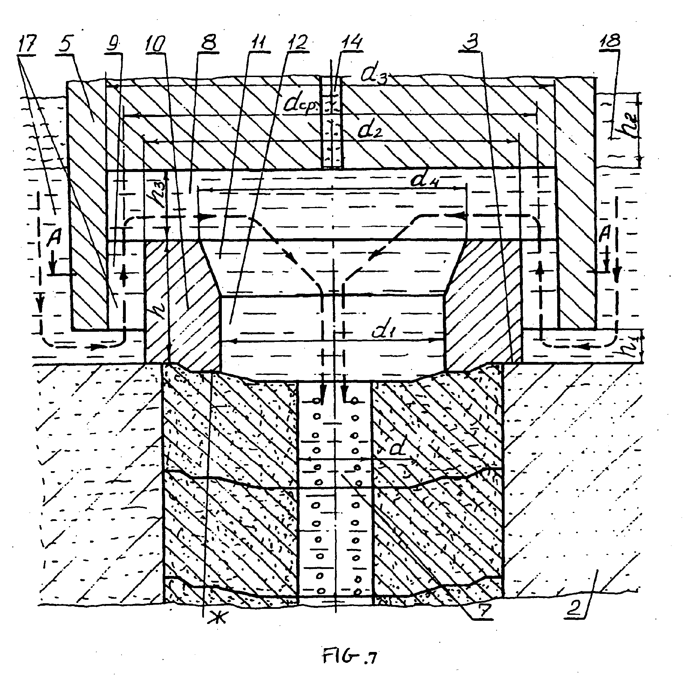

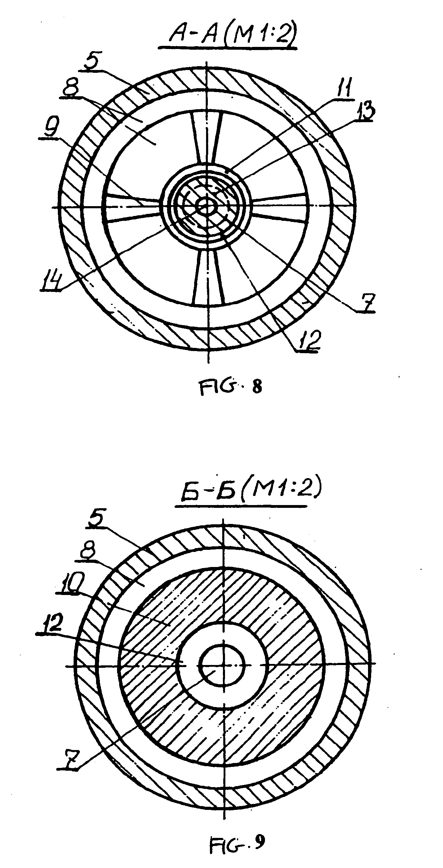

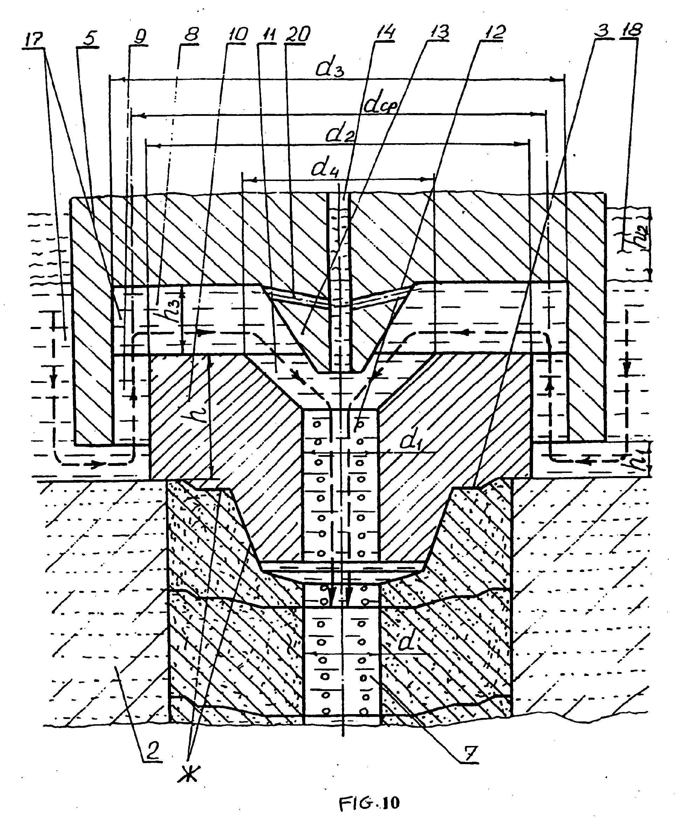

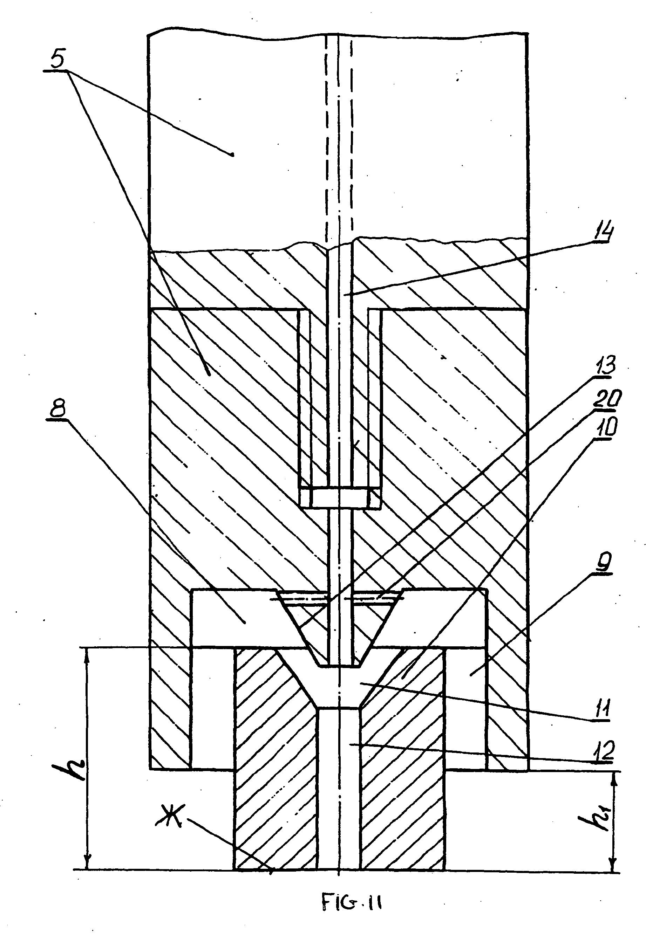

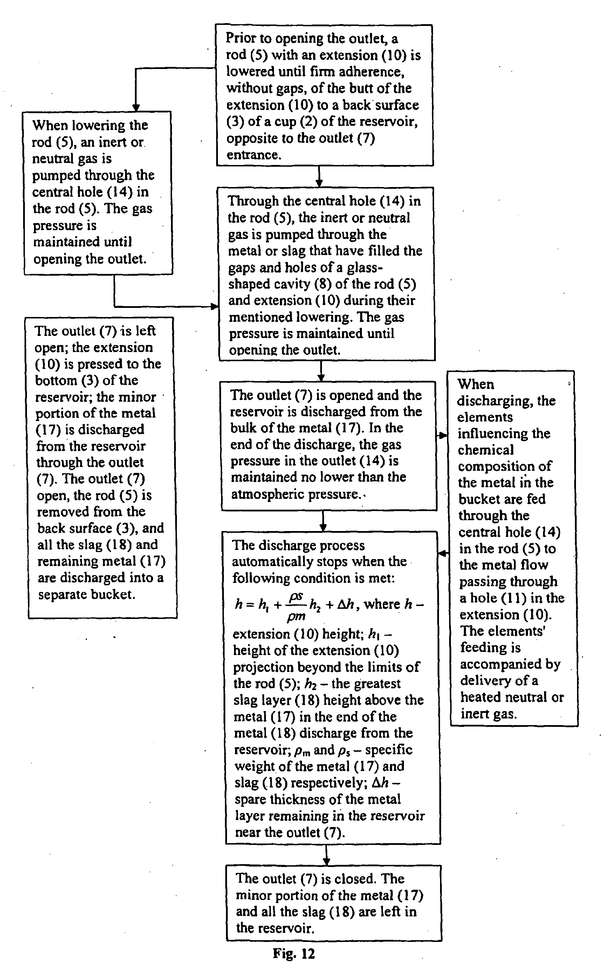

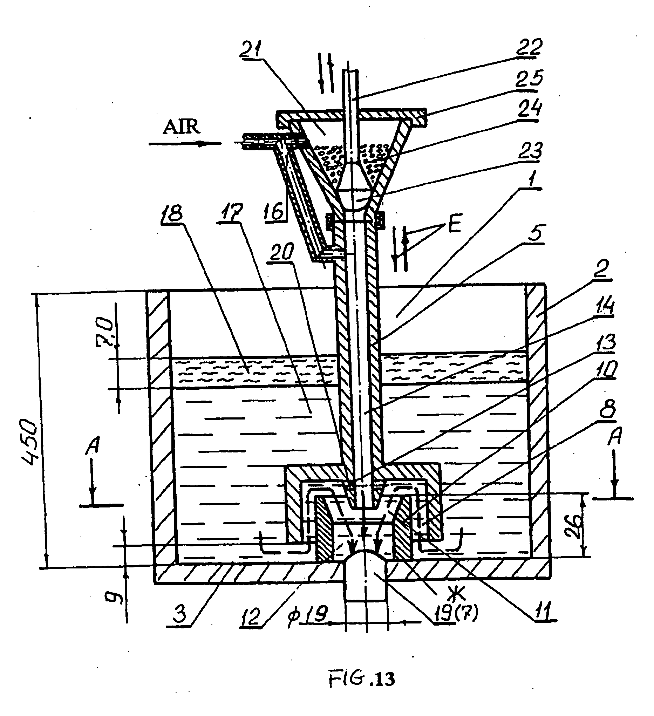

Fig.1 - smelting chamber with upper structure of framed construction in the form of arched roof before chamber turning for its emptying; fig.2 - chamber position (without upper structure) after the turning of chamber for discharging and during its emptying from the greater part of metal; fig.3 - smelting chamber (without upper structure) with bay-window arrangement of outlet; fig.4 - positioning of shaft-type smelting chamber (without upper structure) before and during chamber discharging from the greater part of molten metal; fig.5 - basic components of spindle going in molten metal of the chamber that provide method realization; fig.6 - sectional drawing A-A of the fig.5; fig.7 - arrangement example of basic components for lower part of the spindle before metal tapping providing discharging method realization; fig.8 - sectional drawing A-A of the fig.7; fig.9 - sectional drawing B-B of the fig.7; fig.10 - arrangement variant of basic components for the lower part of the spindle going in metal of the chamber with its centering in reference to the axis of outlet on the chamber bottom; fig. 11 - assembled spindle with replaceable lower part; fig.12 - the sequence of basic operations during the method realization; fig.13 - scheme of laboratory setup (cold model) with performance evaluation of technique realization in advanced method; fig.14 - sectional drawing of the fig.13.

The smelting chamber posesses operating space 1 (fig.1) formed by the figurate bowl 2 with variable depth of bottom surface 3 (fig.1) and limited on the top by the framed structure 4 from ambient medium. The mentioned structure can be executed in the form of arched roof (shown in the fig.1) or correspond to the framed structure for arc steel-smelting furnaces designed for furnace-charge from the top by the junk heated with the help of exit gases. For realization of the advanced method the construction of the upper structure in the chamber doesn't represent fundamental matter. The only important thing is provision of place for going of spindle 5 in structural section that is asymmetrical to the vertical axis 6 of the chamber and situated oppositely to the outlet 7 on the chamber bottom surface 3. It is also necessary to provide the possibility to prevent the influence of the charged junk (charge) upon the spindle 5. Long axis of the spindle 5 can be concentric to the axis of outlet 7 that is deviated from the chamber vertical axis 6 at an angle of deflection $\gamma$. The long axis of the spindle 5 can be situated vertically, i.e. make the angle $\gamma$ with the axis of outlet 7. However in both considered cases concerning the position of spindle 5 axis and outlet 7 axis the indicated axes will cross at the point "C" in the input centre of the outlet 7 on the bottom surface 3 (figures 1-3). Before the process of chamber emptying the outlet can have the material that blocks it, for example sand (fig.7).

The axis of outlet 7 can be positioned vertically, in parallel to vertical axis 6 of the chamber (figure 4). In this case the emptying of smelting chamber from the greater part of molten metal is carried out without widely spread turning of the chamber in direction toward the outlet 7 for positioning the axis of outlet 7 practically in vertical state.

The spindle 5 has a mechanism of axial movement in direction to / from the chamber bottom 3 that is connected with the upper part of the spindle. Technical embodiment of this displacement mechanism of spindle 5 does not determine the matter of operational execution of advanced method. Therefore this mechanism is not discussed here. In particular, this mechanism can be placed outside the structure of the smelting chamber. What matters in execution of advanced method techniques is the presence of the mentioned mechanism for axial movement of the spindle 5, the provision of spindle 5 displacements with the help of this mechanism up to tight contact with the chamber bottom 3 and reaching by this mechanism the position "D" (fig.1) of spindle when it is situated in chamber operating space but doesn't contact with the charge loaded into the chamber, as well as provision by this mechanism of bringing-out the whole spindle 5 outward the chamber limits. The directions of the spindle 5 displacement being executed with the help of this mechanism are shown in the figure 1 by arrows "E".

The lower part of the spindle 5 has a glass-shaped enclosure 8 (fig.5) where the extension 10 representing the spindle part is rigidly fixed by bridges 9 on the centre of the spindle 5. At that depending on parameters of the outlet 7 the bridges 9 can be situated on sides of the extension 10 (fig.5 and 6) or on the upper butt end of the extension 10 (fig. 7-9). Other variants of extension 9 positioning are also possible. Besides it is well to bear in mind that the execution variant and the location of bridges 9 influence upon the size of open flow area for the running metal although this influence is very slight and can be neglected.

The extension 10 ascended over the value $h_1$ (fig.5, 7, 10 and 11) juts out the limits of butt end of the spindle 5 and possesses the height $h$ (fig.5, 7, 10 and 11). The lower surface "Zh" on the butt end of the extension 10 has the surface outline that is identical to the outline of the chamber bottom surface 3 in input to the outlet 7. There are clearances between mirrored surfaces of the glass-shaped enclosure 8 and the extension 10 (i.e. inner surface of the enclosure 8 and outer surface of the extension 10 as well as the bottom surface of the enclosure 8 and outer butt end of the extension 10). Leakage area of each clearance is equal at least to $\pi d^2/4$, where $d$ is a diameter of the outlet (fig.5 and 6, 7 and 8, 10).

The extension 10 is made with a central through hole. Furthermore this hole consists of two parts: tapered section 11 and cylindrical section 12. The diameter of cylindrical section is $d_1 \geq d,$ where $d$ - diameter of the chamber outlet 7, at that $d_1 > d$ is preferred.

In order to simplify the tight adherence of the lower butt end of extension 10 to the bottom surface 3 in the area of input to the outlet 7 the lower part of extension 10 is executed with tapered jut, accordingly the input of chamber outlet 7 is made in the form of hole with tapered surface (fig. 10).

The following formula is typical for the spindle 5, its rigid connection with the extension 10 and their mutual coupling with the input of chamber outlet 7:

$$h > h_1 + \frac{\rho_s}{\rho_m} h_2,$$

$$(1)$$

where $h$ - height of the extension 10 (fig. 5, 7 and 10);

$h_1$ - height of the extension 10 jut beyond the spindle 5 limits (fig.1, 4, 5, 7 and 10);

$h_2$ - assumed maximum height of slag layer over the metal at the end of metal tapping from the chamber (fig.5, 7 and 10);

$\rho_m$ and $\rho_s$ - specific mass of metal and slag correspondingly (for slag the value is assumed).

The glass-shaped enclosure 8 comes in two modifications: with the flat bottom (fig.5) and with the jut 13 in the bottom centre (fig. 7, 10, 11 and 13) that together with the clearance is coming into the opening 11 of the through hole in extension 10 and the butt end of the jut 13 is placed lower than the upper butt end of the extension 10 in such a way that the jut 3 actually goes into the tapered opening 11 of extension 10 and can come into cylindrical hole 12 in extension 10, at that the cross section of the formed gap between the corresponding surfaces of opening 11 and jut 13 (hole 12 and jut 13) exceeds the cross section of the outlet 7.

There is a through hole 14 from the butt end of jut 13 to the upper part of spindle 5 made in its centre (fig.7, 10, 11 1 and 13). The spindle 5 with flat bottom of the glass-shaped enclosure 8 (fig.5) is executed identically. Flexible hose 15 (fig.1) connects the upper part of the spindle 5 with the hole 14. This hose provides the addition of elements changing the chemical composition of steel during its being in the bucket to the molten metal leaving the chamber. This addition is accompanied by the inflow of inert or inactive gas through the hose 16. The hoses 15 and 16 are linked with feeding mechanisms of hard materials with different fraction and inert or inactive gas correspondingly. Joint embodiment of hoses 15 and 16 is also possible, i.e. the addition of elements to the molten metal is carried out simultaneously with gas from the corresponding container through the same hose.

The gas must be preliminary heated, at that the final gas temperature during its coming into the molten metal is equal (or a little bit lower) to the temperature of molten metal. It should be accomplished through inductive heating of steel tubing in the upper part of the spindle 5 or the end of the hose 16 must be made of metal with inductive or other type of heating or the metal end of the hose 16 is wound round the upper part of the spindle 5 several times and only after that the hose 16 enters in the hole 14. By addition of elements delivered to the molten metal together with inert or inactive gas from the container through the same hose the process of gas heating can be performed before joining of delivered elements and gas in a single flow.

Note that accepted technique of gas heating to be supplied is not of fundamental importance for realization of advanced method. It is more essential that at the moment of coming into the metal flow leaving the chamber the gas temperature is close to the temperature of metal but doesn't exceed it.

It is also important to enable gas feeding to the metal without preliminary heating exclusive of heating during going through the hole 14 of the spindle 5. This case can provide a separate line for gas supply into the hole 14.

The spindle 5 is preferably to be made assembled and in such a way that the lower part of the spindle including the glass-shaped enclosure 8 and the extension 10 fixed there are replaceable (fig. 11). However it is possible to use non-demountable spindle 5 fixedly connected with the extension 10. In this case the chamber operation contemplates a set of spindles 5 that must be systematically repaired.

Before and during the process of emptying the chamber operating space 1 contains molten metal 17 and slag 18 over the metal. Before start of chamber discharging from the greater part of molten metal the outlet 7 is closed by blocking mechanism (plug fitting) 19 and filled for example with sand (fig.1-4, 7).

There are crosswise channels 20 in construction of the jut 13 in the spindle 5; the channels additionally bind the central hole 14 with the enclosure 8 at the level of enclosure (fig.7, 10, 11 and 13). The channels 20 can be made inclined (fig.10) with the bottom descending of enclosure 8 toward the central hole 14 of the spindle 5.

The method of chamber emptying from the greater part of molten metal is carried out in the following way.

Operating space 1 of the chamber is filled up to determined level with the molten metal 17 and layer of slag 18 over it (the fig.1-4 don't illustrate it since these figures don't determine basic provisions of advanced method concerning chamber discharging from the part of molten metal). Metal 17 and layer of slag 18 with the thickness $h_2$ are shown in the fig. 5, 7 and 10.

Method realization begins when the charge of the chamber is clear-melted, the part of slag is pumped out and the chamber with molten metal and the rest slag is getting ready to be emptied.

At this juncture the spindle 5 is moved down from the position "$D$" (fig.1) by the displacement drive (see the arrow $E$ in the fig.1) till the tight gapless contact of the lower butt end "$Zh$" of extension 10 with the bottom surface 3 of the chamber in the section of the outlet 7 (fig. 1, 2, 5, 7 and 10).

Considerable excess (for example, twofold and more) of diameter $d_1$ in the hole 12 of extension 10 over diameter *d* of the outlet ($d_1 > d$ in the fig. 5 and 7) and tight contact of the lower butt end "*Zh*" of extension 10 with the bottom surface 3 of the chamber provide guaranteed (free) metal flowing through the hole 12 into the outlet 7. Furthermore the mentioned considerable excess of diameter $d_1$ over *d* removes inaccuracy influences (displacements) in the process of spindle 5 adjustment to the process of chamber emptying from the molten metal.

The same task can be solved by execution of tapered input into the outlet 7 in bottom surface 3 of the chamber. The extension 10 is oppositely provided with tapered mirrored surface "*Zh*" to this tapered input (fig.10).

The smelting chamber must be rotated for discharging and take the position shown in the fig. 2. If embodiment of the bottom surface 3 differs from the fig. 1-3 then the chamber emptying is executed without chamber rotation (fig. 4).

In both cases of method realization concerning chamber discharging from the greater part of molten metal the relative positioning of metal 17, slag 18, spindle 5, extension 10 and outlet 7 in the chamber bottom surface 3 is provided in such a manner as it is shown in fig. 5, 7 and 10. At that if the chamber is rotated the thickness of slag layer 18 is changed up to the value $h_2$ in fig. 5, 7 and 10 and this thickness must be assumed as a basis at determination of moment for automatic stop of chamber emptying and estimation of metal amount left in the chamber bowl 2.

The initial position "*D*" of the spindle 5 in operating space 1 of the chamber and the following position of the lower part of the spindle 5 in molten metal 17 before the chamber emptying exclude the cooling influence of spindle 5 elements upon the metal 17 near the outlet 7.

During the described process of spindle 5 sinking into the bath with metal 17 the metal 17 and the slag 18 are entering into the holes 11 and 12 in extension 10 and hole 14 in spindle 5 as well as into the clearances formed by difference of diameters $d_3$ of enclosure and $d_2$ of extension and bottom of enclosure 8 and the upper butt end of extension 10. For slag 18 removal (together with metal) inactive or inert gas must be intensively circulated through the hole 14 in spindle 5, holes 11 and 12 in extension 10 and the mentioned clearances. Being heated from the contact with hot spindle 5 and coming into the metal 17 the feeding gas expands and forces out metal 17 and slag 18 that appeared in these holes and clearances.

In order to speed up the operation of chamber discharging the intensive circulation of inactive or inert gas through the hole 14 in spindle 5 must be carried simultaneously with the process of spindle 5 sinking. It excludes the slag ingress into the indicated holes and clearances. In both cases the gas must be preliminary heated and its pressure shouldn't exceed the pressure of molten metal on plug fitting 19 in the outlet 7. To simplify the operation of intensive circulation of the gas 2 and slag removal it is possible to use the separate system of gas feeding to the hole 14 in spindle 5 from the system of the same gas feeding together with elements being introduced to the metal to change its chemical composition.

In both cases of inert gas circulation the fixed level of gas pressure must be held up to the start of chamber emptying. It excludes metal entering into the central hole 14 and possible metal bouncing inside this hole.

In this juncture the blocking mechanism must being opened (fitting plug 19 is removed), so the outlet 7 becomes open and the process of chamber emptying can be started. During the discharging process the flows of metal 17 are descending to the chamber bottom surface 3, then come along the bottom surface in the clearance with the height $h_1$, and after that go up along the clearance ($d_3 - d_2$) on height *h* and above up to the glass-shaped enclosure 8 and finally rush to the holes 11 and 12 in extension 10 and into the outlet 7 (the described process is shown in fig. 5, 7 and 10 by pecked lines and arrows indicated the direction of metal flow movement during chamber emptying). An important point is that the described movement arrangement of metal flows excludes metal vortex at the entry into the outlet since the long horizontal displacement of metal flows near the input of the outlet 7 is absent.

Free discharge of molten metal 17 from the chamber bowl 2 is provided thanks to the fact that separately all the enumerated holes and clearances, including the formed by the jut $h_1$ of extension 10 beyond the spindle 5 limits, through which the metal flows go on their way from the chamber bowl 2 to the outlet 7 possess the passage and surface area that is at least equal to the passage area of the outlet 7 but more often exceed it. Thus during method realization the structure prescribes the following condition (fig. 5, 7 and 10):

$$\pi d_3 \cdot h_1 > \frac{\pi}{4}\left(d_4^2 - d_3^2\right) > \pi d_4 h_3 > \frac{\pi}{4}\left(d_1^2 - d_{13}^2\right) > \frac{\pi d^2}{4},$$

$$(2)$$

where $d_{13}$ -cross sectional diameter of the jut 13 at a relevant distance from its butt end.

During condition (2) realization the last inequation of compared passage and surface areas provides at least fourfold excess of compared areas. That excludes the influence of discharging action of metal flow that leaves the chamber outlet 7 upon stability of emptying process. If it is necessary the influence of bridges 9 on fulfillment of condition (2) must be taken into consideration. However the sizes of bridges 9 are selected for the structure in such a way that they slightly influence upon the condition (2) fulfillment.

While the chamber bowl 2 is being emptied the level of metal 17 and slag 18 is continuously descending to the chamber bottom 3 up to the moment when the following congruence is reached in compliance with the condition (1):

$$h = h_1 + \frac{\rho_s}{\rho_m} h_2 + \Delta h, \qquad (3)$$

where $\Delta h$ - reserve layer thickness of the metal left in the chamber in section of the outlet that ensures the exclusion of slag ingress into the outlet 7.

As soon as the congruence (3) is reached the emptying of chamber bowl 2 from the greater part of molten metal stops automatically and the whole slag of thickness $h_2$ together with the rest part of metal 17 are left in bowl 2. The layer thickness above the bottom surface 3 level near the input to the outlet 7 gives:

$$h_m = h - \frac{\rho_s}{\rho_m} h_2 = h_1 + \Delta h$$

$$(4)$$

The value $h_m$ can be influenced by changing of the height $h$ in extension 10 and its jut $h_1$ out of the spindle 5 limits. This change compensates the influence of density $\rho_s$ of the formed slag 18 and the height of its layer $h_2$ upon fulfillment of conditions (3) and (4). At that the values of $\rho_s$ and $h_2$ are predicted for successive fusion (fusions) proceeding from chemical composition of slag necessary to be put for fusion running and getting of required chemical composition and temperature of molten metal 17. Change of the height $h$ and the value $h_1$ (if it is necessary) is carried out between smelting operations, at that must be used assembled embodiment of the spindle 5 with replaceable lower part including glass-shaped enclosure 8 and the extension 10 fixed in it (fig. 11). The substitution of the spindle 5 lower part is performed outside the chamber operating space 1 during the time when the fusion of charge (junk) is taking place inside the chamber operating space.

Thus the described process of replacement of spindle 5 lower part doesn't influence on smelting duration.

The constituent element of the modern metallurgy has become the working of molten metal outside the furnace, in particular inside the bucket to which the metal comes from the smelting chamber in compliance with the description above.

The advanced method of smelting chamber discharging from molten metal also includes the execution of operations influencing on chemical composition of metal in the bucket by putting the corresponding elements into the molten metal flows leaving the chamber, particularly in metal flows going into the outlet 7.

The delivery of elements is executed with the help of hose 15 and central 14 in the spindle 5. The delivery of elements must be accompanied by feeding of inactive of inert gas through the hose 16. At that the gas is preheated by one of described modes. Determination of gas preheat temperature depends on its heating during the process of passing through the hole 14 in spindle 5. Anyhow the temperature at the output from the hole 14 into the metal flow must be provided as equal but generally lower (100... 200 degr.) than the temperature of this metal.

Gas preheating excludes the possible spattering of molten metal flow on the way of its movement between the output from the outlet 7 and input into the bucket. If the gas is fed without preheating the spattering of the mentioned metal flow takes place due to sharp increase of gas bubbles being heated by the molten metal.

On the other hand gas preheating doesn't provide the rise of metal temperature, therefore the gas temperature must be provided at the indicated level.

Crosswise channels 20 render possible to supply gas pressure over the metal in glass-shaped enclosure 8 at least equal to atmospheric pressure. Inclined execution of crosswise channels 20 with descending from the bottom of glass-shaped enclosure 8 towards the central hole 14 in spindle 5 (fig. 10) simplifies gas partial entrance from the hole 14 into the enclosure 8 to the section of enclosure bottom. The best result of chamber emptying is reached when this pressure is varied considering the lowering motion of metal 17 and slag 18 level while chamber emptying; at that gas pressure at the end of emptying process must be 0,1...0,2 bars higher than atmospheric one. The best result means the minimum influence of gases on the process of chamber discharging (upon size section of metal flow leaving the outlet 7) and excludes filling of central hole 14 with metal as well as possible metal bouncing inside the outlet.

The best result of chamber discharging described above to the full extent meets the condition when gas pressure at the input to the spindle's central hole 14 is equal to the value (with due account for heating during the process of spindle 5 passing) providing gas pressure at the output from the hole 14 that is somewhat higher (0,1 ...0,2 bars) or equal to the metal pressure on the butt end of jut 13 in the spindle 5. Adherence of this condition is necessary to exclude the rise of metal 17 into the hole 14. This rise happens when the pressure of feeding gas is less than the metal pressure on the butt end of the jut 13.

This method realization advances means and devices that prevent metal leaving the chamber from the contact with surrounding air up to the output from the outlet 7 and provide safety running of processes concerning preparation, storage and transportation of granular materials added to steel.

The method realization at production of steel as molten metal assumes solving of steel desulphuration, its phosphorus removal, deoxidation, nitrogen hardening (or removal of nitrogen), carbon penetration, alloying by different elements, removal of nonmetallics etc., i.e. complex actions providing the change of steel chemical composition during the process of its pouring as well as quality improvement.

The important economic benefit of the advanced method is the reduction of alloy elements, especially those that are inclined to higher oxidation (for example, *Al* and others).

This method realization relating to molten steel contemplates the operation with the following elements, generally in powdery form:

1) for desulphuration: CaSi, $CaC_2$, $CaCN_2$, CaAl, CaMg, CaSiMg, Mg and others. At that slagging reaction provides combinations: CaO - $CaF_2$; CaO - $Al_2O_3$; CaO - $Al_2O_3$ - $CaF_2$; CaO - Al; CaO - $CaF_2$ - Al; CaO - $CaF_2$ - CaSi; CaO - Mg; CaO - $CaF_2$ - Mg; CaO and others;
2) for deoxidation (deacidification): CaSi; CaSiBa; CaSiMn; CaSiMnAl; CaSiMgFe; Al and others;
3) for sulfur modification: CaSi; SiZr and others;
4) for phosphorus removal: CaO - $CaF_2$ - $Fe_2O_3$ mixed;
5) for denitration: FeZr; SiZr and others;
6) for alloying: Si c FeSi75; N c $CaCN_2$ ($\approx$ 55 % $CaCN_2$; 33 % CaO; 12 % C).

With powder graphite:

B with $B_2O_3$;
Ni with nickel oxides;
Mo with molybdenum oxides.

Taking into account economical considerations the following fractions are used for a number of powders:

CaSi - to 0,6 mm;
$CaC_2$ - 0,1...0,6 mm;
CaMg - 0,1...1,5 mm.

During this method realization the known safety rules and recommendations concerning the work with granular materials must be followed:

- local concentration of undersized particles is not possible;
- access of direct flame, sparkles or metal drippings is excluded;
- appearance of electrostatic discharges is prohibited;
- gas or other dampening of granular materials during their storage and transportation is excluded.

Especially these recommendations must be observed when *Al, Mg, CaSi* and *$CaC_2$* are used; in this case only *Ar* can be used as a gas.

During method realization it is important to consider that a number of powder materials with the particle size < 0,2 mm (and even 0,5 mm) tend to form explosive mixtures. This method realization is impossible without strict observance of known rules and experience accumulated in the sphere of work with granular materials. The usage and observance of these rules guarantees security of method execution.

The rest of the molten metal 17 that is left in the bowl 2 of smelting chamber is used for speed-up of the next fusing realization before which the chamber must be returned in initial position (if it was rotated for emptying), the outlet must be closed by the fitting plug 19 (in some instances the main part of the outlet 7 is filled up with sand), the spindle 5 is raised in position that is safe from the charge (junk) being loaded into the bowl 2 (position "*D*" in the fig. 1), the bowl 2 is loaded with the charge and a new smelting process takes place.

In the event that the work of smelting chamber is stopped, for example, for repair of the bowl 2 the rest part of metal 17 and the whole slag 18 left in the bowl must be removed. To execute this operation the chamber must be additionally rotated and the metal layer near the outlet is to be increased. Then the conditions of congruence (3) that were already described must be used. For this reason the chamber must be discharged from the rest metal with holding at the beginning the spindle 5 pressed to the bottom 3 of extension 10 and open outlet 7. After that when the outlet 7 is open the spindle 5 must be removed from the chamber bottom surface 3 and the whole slag 18 and metal 17 the thickness of which is equal to $h_1 + \Delta h$ is discharged into a separate vessel (bucket). At that the additional chamber rotation considerably reduces the amount of metal 17 being discharged together with the slag 18. That minimizes the ingress of smelting chamber slag into the metal, so the losses of metal are minimized.

The realization process of advanced method concerning smelting chamber discharging from the greater part of molten metal by pouring of metal into the bucket with the usage of suggested chamber contemplates the following sequence of basic operations (fig. 12, the double line indicates alternative operations in method execution):

- before opening of the outlet and starting of chamber emptying from the greater part of metal the spindle with extension must be descended up to the tight contact without clearances of extension butt end to the chamber bottom surface opposite to the outlet in this section of bottom surface, through central hole in the spindle inactive or inert gas must be fed through the metal and slag filled up the clearances and the holes of spindle and extension during described descending, the outlet must be opened and after that the chamber emptying takes place. At that during emptying process through the central hole in spindle the metal flow passing through the extension hole receives elements influencing on the chemical composition of molten metal in the bucket and the delivery of these elements is accompanied by feeding of inactive or inert gas that by the time of its entering into the metal is preheated to the temperature close to the temperature of metal. The process of chamber emptying itself is automatically terminated at fulfillment of the condition $h = h_1 + \dfrac{\rho_s}{\rho_m} h_2 + \Delta h$ where $h$ -extension height, $h_1$ - height of the jut over spindle limits, $h_2$ -

the maximum height of slag layer over the metal at the end of metal tapping, $\rho_m$ and $\rho_s$ - specific mass of metal and slag correspondingly, $\Delta h$ - in the section of outlet the thickness reserve of metal layer left in the chamber, at that the rest metal and the whole slag are left in chamber or if it is necessary to empty the chamber completely the outlet 7 must remain opened, the extension 10 is pressed to the chamber bottom 3 that is additionally rotated (in the presence of displacement drive), the smaller part of metal 17 is discharged from the chamber through the outlet 7. When the outlet 7 is opened the spindle 5 is removed from the bottom surface 3 and the whole slag 18 and the rest metal 17 the layer thickness of which is equal to $h_1 + \Delta h$ are discharged into separate bucket.

Thus the realization of this method concerning chamber discharging from the greater part of molten metal is carried out by pouring of this metal into the bucket with assured exclusion of furnace slag ingress into the metal inside the bucket. At that during chamber emptying from molten metal all the necessary and sufficient elements together with inactive or inert gas are delivered into the metal flows leaving the chamber in order to receive in the bucket the metal of intended chemical composition.

Economic effect of the advanced method of smelting chamber discharging from the greater part of metal and the construction of chamber for its performance appears in increase of metal quality at the expense of assured exclusion of furnace slag ingress into the bucket, in operating metal working in the bucket outside the furnace, in reduction of alloy elements.

Example. Cold model (fig. 13 and 14) contains the chamber with operating space 1 and the bowl 2 as a part of it, spindle 5 with glass-shaped enclosure 8 in the center of which the extension 10 with through hole consisting of tapered section 11 and cylindrical section 12 is rigidly fixed. The diameter of cylindrical opening 12 is $d_1$ = 40 mm. In the bottom 3 of the chamber 2 there is an outlet 7 with diameter $d$ = 19 mm. By this means $d_1$ = 2,1 $d$. The outlet 7 is closed by fitting plug 19. The extension 10 stands over the limits of the spindle 5 at $h_1$ = 9 mm. The height of extension 10 above the bowl bottom 3 is equal to $h$ = 26 mm, its external diameter is $d_2$ = 45 mm. Internal diameter of enclosure 8 is equal to $d_3$ = 70 mm, the distance between the upper butt end of extension 10 and bottom of enclosure 8 is $h_3$ = 30 mm. The spindle 5 with diameter 25 mm possesses the jut 13 the butt end of which is situated lower below the upper butt end of extension 10 and at least enters in the tapered opening 11. There is a through hole 14 with diameter Ø 10 mm in the centre of the spindle 5; the through hole 14 has crosswise channels 20 at the level of enclosure 8 bottom. In the upper part of the spindle 5 there is a trough 21 that is connected with air through the hose 16. Air pressure can differ. The air was also supplied into the central hole 14. From above the trough 21 is tightly closed by the cover 25 through which passes the spindle 22 with fitting plug 23. The trough 21 is filled with granular material 24 (chips, sugar, salt) that is painted red and dried. The bowl 2 is made of organic glass and has dimensions given in the fig. 13 and 14 that provide the capacity equal to 56 liters of liquid. A vessel made of organic glass with the width 300 mm, length 450 mm and height 400 mm was used as a bucket to where the bowl 2 was emptied through the outlet. The spindle 5 with extension 10 and trough 21 affords the free vertical movement what indicated by arrows E in fig. 13.

Water in the volume of 45 liters imitating the molten metal 17 was filled in the bowl 2. Above the water was poured kerosene colored green and imitating the slag 18 in thickness $h_2$ = 7 mm (about one liter). Water density is $\rho_m$ = 1,0 g/cm$^3$, kerosene density is 0,8 g/cm$^3$.

By mentioned filling of the bowl 2 the fitting plug closed the outlet 7 and the spindle 5 was raised above the layer of kerosene 18.

Before the start of bowl 2 emptying the spindle 5 was lowered into the water 17 and kerosene 18 with constant air delivery under the pressure higher than atmospheric pressure in 0,2 bars through the hose 16 (air flow rate was varied from 5 to 40 1/min.). The cover 25 tightly closed the trough 21. Air delivery was retained after tight contact of the lower butt end *Zh* of extension 10 against the bottom 3 of bowl 2 (fig. 13). There was barrage of water 17 and kerosene 18. The described method excluded the presence of kerosene 18 in clearances of glass-shaped enclosure 8 and in hole 14 that is not provided when the spindle 5 was descended.

The fitting plug 19 was removed and simultaneously the fitting plug 23 was raised by the spindle 22, the bowl 2 was emptied from the greater part of water 17 through the outlet 7.

As a result the process of bowl 2 emptying was accompanied by delivery of sugar sand 24 (it is shown in the fig. 13 by the line with arrow coming from the hole 14) added to the flows of water 17 leaving the bowl 2 through the outlet 7 (the direction of flows is illustrated in the fig. 13 by dashed lines and arrows). At that the sugar sand 24 began to mingle with water 17 and dissolve there in the moment of flow coming into the opening 11 and the process of their mingling went on during coming through the hole 12 of the outlet 7 and in water flow going into the vessel that imitated bucket.

The system scheme i.e. bowl 2, spindle 5, glass-shaped enclosure 8 and extension 10, as well as realization of described modes of bowl 2 emptying provides automatic stop of bowl 2 discharging, at that the bowl 2 contained the whole kerosene 18 and the smaller part of water 17 the layer thickness of which according to the equation (4) comprised:

$$h_m = h - \frac{\rho_s}{\rho_m} \cdot h_2 = 26 - \frac{0,8}{1,0} \cdot 7 = 20,4 \; mm.$$

Upon that during the processes of indicated mingling and dissolving the sugar sand (similarly salt) colored practically even the whole volume of water in the vessel imitating bucket during 10...15 s after the beginning of bowl 2 emptying. The last speaks for even distribution and dissolution of sugar (salt) in water during the process of described bowl 2 discharging from water and its pouring into the vessel imitating bucket.

## Claims

1. A method of discharging molten metal from a smelting chamber through an outlet (7) in the bottom surface (3) of the chamber, comprising:

    providing a descending metal flow (17) which leaves the chamber at a point which is lower than its input to the outlet (7) and above the lower surface (3) of a section of the chamber in which the outlet (7) is located; wherein the metal flow (17) moves along said chamber lower surface (3), ascends to a point higher than the input to the outlet (7), and is tapped through said outlet (7);
    the descending and ascending metal flows (17) are divided by a wall (5), a clearance being provided between a lower end of said wall (5) and the chamber lower surface (3), which connects the descending and ascending metal flows (17); **characterised in that**
    before discharging commences, the input to the outlet (7) is raised above its initial position in the chamber lower surface (3) by means of the wall (5), the height of which wall (5) determines the rise of the input to the outlet (7), and the raised position is maintained until a greater proportion of metal has been discharged from the chamber; and
    then restoring the initial position of the input into the outlet (7), leaving a small proportion of metal remaining inside the chamber.

2. A method according to claim 1, wherein the metal flow (17) coming into the outlet (7) receives elements that influence the chemical composition of molten metal, simultaneously with feeding inactive or inert gas to the metal flow (17).

3. A method according to claim 2, wherein the delivery point of elements into the molten metal is lower than the input to the outlet (7).

**4.** A method according to claim 2, wherein the inactive or inert gas is preheated.

**5.** A method according to claim 1, wherein before discharging commences, an inactive or inert gas is circulated through the metal situated over the outlet (7) and in clearances intended for metal passing from the chamber into the outlet (7), wherein after the completion of gas circulation the gas pressure is maintained until the commencement of tapping.

**6.** A method according to claim 1, wherein before the chamber is charged, a mechanism for raising the level of the input to the outlet (7) is moved to a point which avoids any contact with the charge.

**7.** A smelting chamber for use in the method of claim 1, comprising:

an operating space defined by a bowl (2) having an insulated cover in the form of a framed structure (4); a spindle (5) made of fireproof material, passing through an upper part of the framed construction (4) opposite the outlet (7), wherein a top end of the spindle (5) is situated outside the chamber operating space, the spindle (5) being axially displaceable from the drive (E) in the direction of the bottom surface of the chamber (3); wherein a lower part of the spindle (5) ends in a glass-shaped enclosure (8), to which an extension (10) is rigidly affixed by bridges (9) on the centre of the spindle (5), with clearances between corresponding mirrored surfaces of the enclosure (8) and the extension (10); the extension (10) comprises a central through-hole (11 and 12), and an end (13) of the extension (10) projects beyond the spindle (5), and a surface of said end corresponds to the bottom surface (3) of the chamber in the proximity of the input to the outlet (7); the height of the extension (10) above the bottom surface (3) of the chamber in the proximity of the outlet (7) provides the height of the ascent of the metal flow to the input of the outlet (7); and said holes and clearances provided for metal flow from the chamber to the outlet (7) have cross-sectional areas at least equal to cross-sectional area of the outlet (7).

**8.** A smelting chamber according to claim 7, wherein the spindle through-hole (11 and 12) extends from the projecting end of the extension (10) to the upper part of the apindle (5).

**9.** A smelting chamber according to claim 7, wherein the spindle (5) and its connection with the extension (10) are provided by formula $h > h_1 + \dfrac{\rho_s}{\rho_m} h_2$, where $h$ is an extension height, $h_1$ is a height of the projection of the extension end (13) beyond the spindle (5) limits, $h_2$ is an assumed maximum height of slag layer (18) over the metal (17) at the end of metal tapping from the chamber, $\rho_m$ and $\rho_s$ are specific masses of metal (17) and slag (18) correspondingly.

**10.** A smelting chamber according to claim 7, wherein in its downward position the spindle (5) is joined without clearance by the projecting end (13) of the extension to the surface of the chamber bottom (3).

**11.** A smelting chamber according to claim 7, wherein the input to the outlet (7) on the bottom surface (3) of the chamber comprises a hole with a tapered surface, opposite which is the projecting end (13) of the extension (10) with a mirrored tapered surface directed towards this hole.

**12.** A smelting chamber according to claim 7, wherein lengthways travel of the spindle (5) enables the extension (10) to be removed to an upper part of the chamber operating space, to avoid contact with the metal.

**13.** A smelting chamber according to claim 7, further comprising a projection (13) in the centre of the glass-shaped enclosure (8) and an end of the projection (13) has a central through-hole (14) to the upper part of the spindle (5) which is connected to feeding mechanisms of hard materials with different fraction as well as inert or inactive gas by flexible hoses (15), wherein this hole (14) has crosswise channels (20) that connect the central hole (14) with t glass-shaped enclosure (8).

**14.** A smelting chamber according to claim 13, wherein the crosswise channels (20) are inclined, ascending from the bottom of the glass-shaped enclosure toward the central hole of the spindle (5).

**15.** A smelting chamber according to claim 7, wherein an axis of the spindle (5) is perpendicular to the bottom surface (3) of the chamber in the proximity of the outlet (7),

**16.** A smelting chamber according to claim 7, wherein an axis of the spindle (5) deviates from a vertical axis of the outlet (7) at an angle of deflection y, both axes being situated on the same straight line.

**17.** A smelting chamber according to claim 7, wherein the through-hole (11 and 12) in the extension (10) comprises tapered (11) and cylindrical (12) sections, wherein the tapered part (11) is an input and the cylindrical section (12) is an output for the metal, and the diameter of cylindrical part (12) is at least equal to the diameter of the outlet (7).

**18.** A smelting chamber according to claim 7, wherein a lower part of the spindle (5), including the glass-shaped enclosure (8) and extension (10) fixed on it, is replaceable and wherein for the replacement of the lower spindle part the means for removing the spindle (5) from the chamber operating space limits is provided.

**19.** A method of discharging molten metal according to claims 1-6 from a smelting chamber according to claims 7-17, comprising:

charging the chamber and opening the outlet (7) in the chamber bottom;
wherein before the outlet (7) is opened, the spindle (5) with the extension (10) is lowered to the chamber bottom surface (3) opposite the outlet (7) such that there is tight contact without clearance between the lower end of the extension (10) and the chamber bottom surface (3);
feeding inactive or inert gas through the central hole (14) in the spindle (5) during the process of lowering the spindle (5) or after it has been completed and, at the moment of ending the gas feeding, opening the outlet (7) and discharging molten metal from the chamber;
wherein during the discharging process, as the metal flow (17) passes through the central hole (14) in the spindle (5) and the extension (10) hole, it receives elements that influence the chemical composition of the molten metal and the delivery of these elements is accompanied by inactive or inert gas such that, by the time it enters into the metal flow, the gas has a temperature close to the temperature of the metal and its pressure is at least equal to atmospheric pressure;

the process of discharging the chamber is automatically terminated at fulfilment of the condition

$$h = h_1 + \frac{\rho_s}{\rho_m} h_2 + \Delta h \quad , \quad$$ where $\Delta h$ is the depth of metal in the section of outlet (7);

the outlet (7) must be closed and the remaining molten metal and the totality of the slag remain inside the chamber, or the outlet (7) remains opened, the extension (10) is pressed to the chamber bottom (3) and the rest of metal is discharged from the chamber through the outlet (7) ; and
when the outlet (7) is opened the spindle (5) is removed from the bottom surface (3) and the slag (18) and the rest of the metal are discharged into a separate bucket.

**Patentansprüche**

**1.** Verfahren zum Ableiten geschmolzenen Metalls aus einer Schmelzkammer durch einen Auslass (7) in der Bodenfläche (3) der Kammer, das umfasst:

Vorsehen eines absteigenden Metallflusses (17), der die Kammer an einem Punkt verlässt, der tiefer ist als seine Einspeisung in den Auslass (7) und oberhalb der unteren Fläche (3) eines Bereichs der Kammer liegt, in dem sich der Auslass (7) befindet; wobei
sich der Metallfluss (17) entlang der unteren Fläche (3) der Kammer bewegt, zu einem Punkt höher als die Einspeisung in den Auslass (7) aufsteigt und durch den Auslass (7) abgeleitet wird,
der absteigende und aufsteigende Metallfluss (17) durch eine Wand (5) geteilt werden, wobei ein Zwischenraum zwischen einem unteren Ende der Wand (5) und der unteren Fläche (3) der Kammer vorgesehen ist, der den absteigenden und aufsteigenden Metallfluss (17) verbindet; **dadurch gekennzeichnet, dass** vor dem Beginn des Ableitens die Einspeisung in den Auslass (7) über ihre anfängliche Position in der unteren Fläche (3) der Kammer durch die Wand (5) angehoben wird, wobei die Höhe der Wand (5) die Anhebung der Einspeisung in den Auslass (7) festlegt und wobei die angehobene Position beibehalten wird, bis ein größerer Teil des Metalls aus der Kammer ausgespeist wurde; und

dann Wiederherstellen der anfänglichen Position der Einspeisung in den Auslass (7), wobei ein kleiner Teil des Metalls in der Kammer verbleibt.

2. Verfahren nach Anspruch 1, wobei der in den Auslass (7) kommende Metallfluss (17) Elemente erhält, die die chemische Zusammensetzung des geschmolzenen Metalls beeinflussen, wobei gleichzeitig inaktives Gas oder Inertgas zu dem Metallfluss (17) geführt wird.

3. Verfahren nach Anspruch 2, wobei der Zufuhrpunkt der Elemente in das geschmolzene Metall niedriger als die Einspeisung in den Auslass (7) liegt.

4. Verfahren nach Anspruch 2, wobei das inaktive Gas oder Inertgas vorgewärmt wird.

5. Verfahren nach Anspruch 1, wobei vor dem Beginn des Ableitens ein inaktives Gas oder Inertgas durch das über dem Auslass (7) und in für den Übergang des Metalls von der Kammer in den Auslass (7) vorgesehenen Zwischenräumen befindliche Metall zirkuliert wird, wobei nach abgeschlossener Gaszirkulation der Gasdruck aufrechterhalten wird, bis das Ausspeisen beginnt.

6. Verfahren nach Anspruch 1, wobei vor dem Beschicken der Kammer ein Mechanismus zum Anheben des Niveaus der Einspeisung in den Auslass (7) zu einem Punkt bewegt wird, bei dem jeglicher Kontakt mit der Charge vermieden wird.

7. Schmelzkammer zur Verwendung in dem Verfahren nach Anspruch 1, die umfasst:

einen Prozessraum, der durch einen Behälter (2) mit einem isolierten Deckel in Rahmenbauweise (4) definiert wird;

eine aus einem feuerfesten Material gefertigte Spindel (5), die gegenüber dem Auslass (7) durch einen oberen Teil der Rahmenkonstruktion (4) geführt ist, wobei ein oberes Ende der Spindel (5) außerhalb des Prozessraums der Kammer angeordnet ist und wobei die Spindel (5) durch den Antrieb (E) in Richtung der Kammerbodenfläche (3) in axialer Richtung verschiebbar ist; wobei

ein unterer Teil der Spindel (5) in einer glasförmigen Einfassung (8) endet, mit der ein Ansatz (10) über Stege (9) am Zentrum der Spindel (5) starr verbunden ist, mit Zwischenräumen zwischen einander entsprechenden, gespiegelten Flächen der Einfassung (8) und des Ansatzes (10);

der Ansatz (10) ein zentrales Durchgangsloch (11, 12) aufweist, ein Ende (13) des Ansatzes (10) über die Spindel (5) hinausragt und eine Fläche dieses Endes der Bodenfläche (3) der Kammer in der Nähe der Einspeisung in den Auslass (7) entspricht;

die Höhe des Ansatzes (10) über der Bodenfläche (3) der Kammer in der Nähe des Auslasses (7) die Höhe des Anstiegs des Metallflusses zur Einspeisung in den Auslass (7) bestimmt; und

die für den Metallfluss von der Kammer zum Auslass (7) vorgesehenen Löcher und Zwischenräume Querschnitte aufweisen, die zumindest dem Querschnitt des Auslasses (7) entsprechen.

8. Schmelzkammer nach Anspruch 7, wobei sich das Spindeldurchgangsloch (11, 12) von dem überstehenden Ende des Ansatzes (10) zu dem oberen Teil der Spindel (5) erstreckt.

9. Schmelzkammer nach Anspruch 7, wobei die Spindel (5) und ihre Verbindung mit dem Ansatz (10) durch die Formel

$$h > h_1 + \frac{\rho_s}{\rho_m} h_2$$

gegeben sind, wobei h eine Höhe des Ansatzes ist, $h_1$ eine Höhe des Überstandes des Ansatzendes (13) über die Grenzen der Spindel (5) hinaus bedeutet, $h_2$ eine vermutete maximale Höhe der Schlackenschicht (18) über dem Metall (17) am Ende des Metallableitens aus der Kammer ist und $\rho_M$ und $\rho_S$ die spezifische Masse des Metalls (17) bzw. der Schlacke (18) bedeuten.

10. Schmelzkammer nach Anspruch 7, wobei die Spindel (5) in ihrer unteren Position ohne Zwischenraum durch das überstehende Ende (13) des Ansatzes an die Oberfläche des Kammerbodens (3) anschließt.

**11.** Schmelzkammer nach Anspruch 7, wobei die Einspeisung in den Auslass (7) an der Bodenfläche (3) der Kammer ein Loch mit einer konischen Oberfläche umfasst, gegenüber der sich das überstehende Ende (13) des Ansatzes (10) mit einer zu diesem Loch gerichteten, gespiegelten schrägen Oberfläche befindet.

**12.** Schmelzkammer nach Anspruch 7, wobei eine Längsbewegung der Spindel (5) es ermöglicht, den Ansatz (10) in einen oberen Teil des Kammerprozessraums abzuziehen, um einen Kontakt mit dem Metall zu umgehen.

**13.** Schmelzkammer nach Anspruch 7, die im Zentrum der glasförmigen Einfassung (8) ferner einen Ansatz (13) aufweist, wobei ein Ende des Ansatzes (13) ein zentrales Durchgangsloch (14) zum oberen Teil der Spindel (5) aufweist, das über flexible Schläuche (15) mit einem Zufuhrmechanismus für Hartstoffe unterschiedlicher Anteile sowie für Inertgas oder inaktives Gas verbunden ist, wobei das Loch (14) Querkanäle (20) aufweist, die das zentrale Loch (14) mit der glasförmigen Einfassung (8) verbinden.

**14.** Schmelzkammer nach Anspruch 13, wobei die Querkanäle (20) von der Unterseite der glasförmigen Einfassung zum Zentralloch der Spindel (5) hin aufsteigend geneigt sind.

**15.** Schmelzkammer nach Anspruch 7, wobei eine Achse der Spindel (5) senkrecht zur Bodenfläche (3) der Kammer nahe dem Auslass (7) ist.

**16.** Schmelzkammer nach Anspruch 7, wobei eine Achse der Spindel (5) von der vertikalen Achse des Auslasses (7) um einen Ablenkwinkel $\gamma$ abweicht, wobei sich beide Achsen auf der selben Geraden befinden.

**17.** Schmelzkammer nach Anspruch 7, wobei das Durchgangsloch (11, 12) in dem Ansatz (10) konische (11) und zylindrische (12) Bereiche umfasst, wobei der konische Bereich (11) einen Einlass bildet und der zylindrische Bereich (12) einen Auslass für das Metall bildet, wobei der Durchmesser des zylindrischen Teils (12) zumindest gleich dem Durchmesser des Auslasses (7) ist.

**18.** Schmelzkammer nach Anspruch 7, wobei ein unterer Teil der Spindel (5), einschließlich der glasförmigen Einfassung (8) und des daran befestigten Ansatzes (10), austauschbar ist und wobei für den Ersatz des unteren Spindelteils eine Einrichtung zum Entfernen der Spindel (5) aus dem Bereich des Kammerprozessraums vorgesehen ist.

**19.** Verfahren zum Ableiten geschmolzenen Metalls nach den Ansprüchen 1 bis 6 aus einer Schmelzkammer nach den Ansprüchen 7 bis 17, das umfasst:

Beschicken der Kammer und Öffnen des Auslasses (7) im Kammerboden;
wobei die Spindel (5) mit dem Ansatz (10) vor dem Öffnen des Auslasses (7) zur Kammerbodenfläche (3) gegenüber des Auslasses (7) so abgesenkt wird, dass ein enger Kontakt ohne Zwischenraum zwischen dem unteren Ende des Ansatzes (10) und der Kammerbodenfläche (3) geschaffen wird;
Zuführen von inaktivem Gas oder Inertgas durch das zentrale Loch (14) in der Spindel (5) während des Absenkens der Spindel (5) oder nachdem dieser Absenkvorgang abgeschlossen ist, und im Augenblick des Beendens der Gaszufuhr Öffnen des Auslasses (7) und Ableiten des geschmolzenen Metalls aus der Kammer;
wobei dem Metall während des Ableitvorgangs, wenn der Metallstrom (17) durch das zentrale Loch (14) in der Spindel (5) und das Loch des Ansatzes (10) fließt, Stoffe zugesetzt werden, die die chemische Zusammensetzung des geschmolzenen Metalls beeinflussen, wobei die Zugabe dieser Stoffe mit der Zufuhr von inaktivem Gas oder Inertgas in einer Weise einhergeht, dass das Gas, wenn es in den Metallstrom kommt, eine Temperatur in der Nähe der Temperatur des Metalls aufweist und sein Druck zumindest gleich Atmosphärendruck ist;
wobei das Entleeren der Kammer automatisch beendet wird, wenn die folgende Bedingung erfüllt ist:

$$h = h_1 + \frac{\rho_s}{\rho_m} h_2 + \Delta h$$

wobei $\Delta h$ die Tiefe des Metalls im Bereich des Auslasses (7) bedeutet;
wobei der Auslass (7) geschlossen werden muss und das restliche geschmolzene Metall und die gesamte Schlacke in der Kammer verbleiben, oder das Auslass (7) offen bleibt, der Ansatz (10) an den Kammerboden (3) gepresst wird und das restliche Metall durch den Auslass (7) aus der Kammer abgeleitet wird; und
die Spindel (5), wenn der Auslass (7) offen ist, von der Bodenfläche (3) entfernt wird und die Schlacke (18) und das restliche Metall in einen getrennten Behälter abgeleitet werden.

**Revendications**

1. Procédé pour évacuer un métal fondu d'une chambre de fusion à travers une sortie (7) dans la surface inférieure (3) de la chambre, comprenant:

   réaliser un écoulement de métal descendant (17) qui quitte la chambre à un point qui est plus bas que son entrée à la sortie (7) et au-dessus de la surface inférieure (3) d'une section de la chambre dans laquelle la sortie (7) se situe; où
   l'écoulement de métal (17) passe le long de ladite surface inférieure (3) de la chambre, monte à un point plus élevé que l'entrée à la sortie (7) et est amené à couler à travers ladite sortie (7);
   les écoulements de métal descendant et ascendant (17) sont divisés par une paroi (5), un espace étant réalisé entre une extrémité inférieure de ladite paroi (5) et la surface inférieure (3) de la chambre qui relie les écoulements de métal descendant et ascendant (17); **caractérisé en ce que**
   avant que l'évacuation ne commence, l'entrée à la sortie (7) est relevée au-delà de sa position initiale dans la surface inférieure (3) de la chambre par la paroi (5), la hauteur de ladite paroi (5) détermine l'augmentation de l'entrée à la sortie (7), et la position relevée est maintenue jusqu'à ce qu'une proportion plus grande de métal ait été évacuée de la chambre; et
   rétablir ensuite la position initiale de l'entrée dans la sortie (7), en laissant une petite proportion de métal qui reste à l'intérieur de la chambre.

2. Procédé selon la revendication 1, dans lequel l'écoulement de métal (17) arrivant dans la sortie (7) reçoit des éléments qui agissent sur la composition chimique du métal fondu, simultanément avec l'amenée d'un gaz inactif ou inerte à l'écoulement de métal (17).

3. Procédé selon la revendication 2, où le point de délivrance des éléments dans le métal fondu est plus bas que l'entrée à la sortie (7).

4. Procédé selon la revendication 2, où le gaz inactif ou inerte est préchauffé.

5. Procédé selon la revendication 1, dans lequel, avant que l'évacuation ne commence, un gaz inactif ou inerte est amené à circuler à travers le métal situé sur la sortie (7) et dans des espaces destinés au passage du métal de la chambre dans la sortie (7), où après l'achèvement de la circulation du gaz, la pression du gaz est maintenue jusqu'au commencement de la coulée.

6. Procédé selon la revendication 1, dans lequel, avant que la chambre ne soit chargée, un mécanisme pour relever le niveau de l'entrée à la sortie (7) est amené à un point qui évite tout contact avec la charge.

7. Chambre de fusion pour utilisation dans le procédé selon la revendication 1, comprenant:

   un espace d'opération défini par une cuvette (2) ayant un couvercle isolant sous la forme d'une structure encadrée (4) ;
   une broche (5) réalisée en un matériau ignifuge passant à travers une partie supérieure de la construction encadrée (4) opposée à la sortie (7), où une extrémité supérieure de la broche (5) se situe à l'extérieur de l'espace d'opération de la chambre, la broche (5) étant axialement déplaçable par l'entraînement (E) dans la direction de la surface inférieure de la chambre (3); où
   une partie inférieure de la broche (5) s'étend dans une enceinte en forme de verre (8) à laquelle une extension (10) est fixée rigidement par des ponts (9) sur le centre de la broche (5), avec des jeux entre des surfaces spéculairement identiques correspondantes de l'enceinte (8) et de l'extension (10);
   l'extension (10) comprend un trou traversant central (11 et 12), et une extrémité (13) de l'extension (10) fait saillie au-delà de la broche (5), et une surface de ladite extrémité correspond à la surface inférieure (3) de la chambre au voisinage de l'entrée à la sortie (7) ;
   la hauteur de l'extension (10) au-dessus de la surface inférieure (3) de la chambre à proximité de la sortie (7) réalise la hauteur de la montée de l'écoulement de métal à l'entrée de la sortie (7) ; et
   lesdits trous et espaces réalisés pour l'écoulement du métal de la chambre à la sortie (7) ont des zones en section transversale au moins égales à la zone en section transversale de la sortie (7).

8.  Chambre de fusion selon la revendication 7, où le trou traversant (11 et 12) de la broche s'étend de l'extrémité saillante de l'extension (10) à la partie supérieure de la broche (5).

9.  Chambre de fusion selon la revendication 7, où la broche (5) et sa connection à l'extension (10) sont réalisés par la formule $h > h_1 + \dfrac{\rho_s}{\rho_m} h_2$, où h est une hauteur d'extension, $h_1$ est une hauteur de la saillie de l'extrémité d'extension (13) au-delà des limites de la broche (5), $h_2$ est une hauteur maximale supposée de la couche de scories (18) sur le métal (17) à l'extrémité du métal coulant de la chambre, $\rho_n$ et $\rho_s$ sont des masses spécifiques de métal (17) et de scories (18) correspondantes.

10. Chambre de fusion selon la revendication 7, dans laquelle dans sa position basse, la broche (5) est reliée sans jeu par l'extrémité saillante (13) de l'extension à la surface du fond (3) de la chambre.

11. Chambre de fusion selon la revendication 7, dans laquelle l'entrée à la sortie (7) sur la surface inférieure (3) de la chambre comprend un trou avec une surface conique, à laquelle est opposée l'extrémité saillante (13) de l'extension (10), une surface conique spéculaire étant dirigée vers ce trou.

12. Chambre de fusion selon la revendication 7, où le déplacement dans le sens de la longueur de la broche (5) permet le retrait de l'extension (10) à une partie supérieure de l'espace d'opération de la chambre, pour éviter le contact avec le métal.

13. Chambre de fusion selon la revendication 7, comprenant en outre une saillie (13) dans le centre de l'enceinte en forme de verre (8), et une extrémité de la saillie (13) possède un trou traversant central (14) à la partie supérieure de la broche (5) qui est relié aux mécanismes d'amenée de matériaux durs à fraction différente ainsi qu'au gaz inerte ou inactif par des tuyaux flexibles (15), ce trou (14) ayant des canaux croisés (20) qui relient le trou central (14) à l'enceinte en forme de verre (8).

14. Chambre de fusion selon la revendication 13, où les canaux croisés (20) sont inclinés, en montant du fond de l'enceinte en forme de verre vers le trou central de la broche (5).

15. Chambre de fusion selon la revendication 7, dans laquelle un axe de la broche (5) est perpendiculaire à la surface inférieure (3) de la chambre au voisinage de la sortie (7).

16. Chambre de fusion selon la revendication 7, dans laquelle un axe de la broche (5) s'écarte d'un axe vertical de la sortie (7) selon un angle de déviation $\gamma$, les deux axes étant situés sur la même ligne droite.

17. Chambre de fusion selon la revendication 7, dans laquelle le trou traversant (11 et 12) dans l'extension (10) comprend des sections conique (11) et cylindrique (12), où la partie conique (11) est une entrée, et la section cylindrique (12) est une sortie pour le métal, et le diamètre de la partie cylindrique (12) est au moins égal au diamètre de la sortie (7).

18. Chambre de fusion selon la revendication 7, dans laquelle une partie inférieure de la broche (5), incluant l'enceinte en forme de verre (8) et l'extension (10) fixée sur celle-ci, est remplaçable, et où pour le remplacement de la partie de broche inférieure, le moyen de retrait de la broche (5) des limites de l'espace d'opération de la chambre est réalisé.

19. Procédé d'évacuation de métal fondu selon les revendications 1 à 6 d'une chambre de fusion selon les revendications 7 à 17, comprenant:

    charger la chambre et ouvrir la sortie (7) dans le fond de la chambre;
    dans lequel, avant que la sortie (7) ne soit ouverte, la broche (5) avec l'extension (10) est abaissée à la surface de fond (3) de la chambre opposée à la sortie (7) de sorte qu'il y a un contact étroit sans jeu entre l'extrémité inférieure de l'extension (10) et la surface de fond de la chambre (3);
    amener du gaz inactif ou inerte à travers le trou central (14) dans la broche (5) durant le processus d'abaissement de la broche (5) ou après qu'il a été achevé et, au moment de l'arrêt de l'amenée du gaz, ouvrir la sortie (7) et évacuer le métal fondu de la chambre;
    où durant le processus d'évacuation, lorsque l'écoulement de métal (17) passe à travers le trou central (14) dans la broche (5) et le trou de l'extension (10), il reçoit des éléments qui agissent sur la composition chimique du métal fondu, et la délivrance de ces éléments s'accompagne de gaz inactifs ou inertes de telle sorte que, au moment où il entre dans l'écoulement de métal, le gaz est à une température proche de la température du métal, et sa pression est au moins égale à la pression atmosphérique;

le procédé d'évacuation de la chambre est automatiquement terminé au moment où la condition

$$h = h_1 + \frac{\rho_s}{\rho_m} h_2 + \Delta h$$ est satisfaite, où $\Delta h$ est la profondeur du métal dans la section de la sortie (7);

la sortie (7) doit être fermée, et le métal fondu restant et la totalité des scories restent à l'intérieur de la chambre, ou bien la sortie (7) reste ouverte, l'extension (10) est pressée dans le fond (3) de la chambre, et le reste de métal est évacué de la chambre à travers la sortie (7); et

lorsque la sortie (7) est ouverte, la broche (5) est retirée de la surface inférieure (3), et les scories (18) et le reste du métal sont évacués dans un seau séparé.

FIG 1

FIG .2

FIG.3

FIG.4

5

21

A-A (M1:2)

FIG.6

A - A

FIG:14

FIG.7

23

## A-A (M1:2)

FIG. 8

## Б-Б (M1:2)

FIG. 9

FIG.10

FIG·11

When lowering the rod (5), an inert or neutral gas is pumped through the central hole (14) in the rod (5). The gas pressure is maintained until opening the outlet.

Prior to opening the outlet, a rod (5) with an extension (10) is lowered until firm adherence, without gaps, of the butt of the extension (10) to a back surface (3) of a cup (2) of the reservoir, opposite to the outlet (7) entrance.

Through the central hole (14) in the rod (5), the inert or neutral gas is pumped through the metal or slag that have filled the gaps and holes of a glass-shaped cavity (8) of the rod (5) and extension (10) during their mentioned lowering. The gas pressure is maintained until opening the outlet.

The outlet (7) is left open; the extension (10) is pressed to the bottom (3) of the reservoir; the minor portion of the metal (17) is discharged from the reservoir through the outlet (7). The outlet (7) open, the rod (5) is removed from the back surface (3), and all the slag (18) and remaining metal (17) are discharged into a separate bucket.

The outlet (7) is opened and the reservoir is discharged from the bulk of the metal (17). In the end of the discharge, the gas pressure in the outlet (14) is maintained no lower than the atmospheric pressure.

When discharging, the elements influencing the chemical composition of the metal in the bucket are fed through the central hole (14) in the rod (5) to the metal flow passing through a hole (11) in the extension (10). The elements' feeding is accompanied by delivery of a heated neutral or inert gas.

The discharge process automatically stops when the following condition is met:

$h = h_1 + \dfrac{\rho s}{\rho m} h_2 + \Delta h$, where $h$ – extension (10) height; $h_1$ – height of the extension (10) projection beyond the limits of the rod (5); $h_2$ – the greatest slag layer (18) height above the metal (17) in the end of the metal (18) discharge from the reservoir; $\rho_m$ and $\rho_s$ – specific weight of the metal (17) and slag (18) respectively; $\Delta h$ – spare thickness of the metal layer remaining in the reservoir near the outlet (7).

The outlet (7) is closed. The minor portion of the metal (17) and all the slag (18) are left in the reservoir.

Fig. 12

FIG.13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2025499 A
- WO 0060297F27D314 A
- WO F27B319 A

### Non-patent literature cited in the description

- *Electrometallurgy,* 2000, 46
- **Stephan Lemke ; Peter Meyerling ; Peter Monheim.** Metallurgical plant and technology. *MRT - 11, translated into Russian,* 2002
- *Technical decisions for steelmaking,* 26
- *Steel,* 2004, 36
- Development prospects for steelmaking technology in arc furnaces by 2010. *Foreign news of ferrous metallurgy,* 2001, 40
- **V.I. Yavojskij.** *Steel metallurgy,* 1983, 51